# EUROPEAN PATENT SPECIFICATION

(11) **EP 0 775 838 B1**
(45) Date of publication and mention of the grant of the patent: **03.07.2002**
(21) Application number: 96203245.4
(22) Date of filing: 20.11.1996
(51) Int. Cl.: F16B 37/04

(54) **A device for fastening an object, more particularly a pipe, to a wall**
Vorrichtung zur Befestigung eines Elementes, insbesondere eines Rohres, an einer Wand
Dispositif pour la fixation d'un objet, en particulier d'un tube à une paroi

(30) Priority: 21.11.1995 NL 1001709
(43) Date of publication of application: 28.05.1997
(73) Proprietor: J. van Walraven B.V., 3641 RK Mijdrecht (NL)
(72) Inventor: van Walraven, Jan, 3641 GP Mijdrecht (NL)
(74) Representative: Boelsma, Gerben Harm, Ir.

(56) References cited:
- DE-U- 29 513 990
- FR-A- 2 626 942
- US-A- 4 830 531

## Description

The invention relates to a fastening assembly, as defined in the first part of independent claims 1 and 2.

Such a fastening assembly is described in NL-A-9401397 (= DE-U-295 13 990) and has been publically used prior to the filing date of NL-A-1001709, from which priority is claimed in connection with the present invention.

More specifically it has been used for fastening pipes to horizontal or vertical walls with the intermediary of pipe clips which surround the pipes to be fastened and are each attached to the free projecting end of a threaded rod member.

With such a fastening assembly a provisional tightening of the nut places the spring member under a certain pretension, which allows the threaded rod to be provisionally mounted in a provisional position to said channel member with a sufficient hold, while it remains easy to adjust the threaded rod by sliding it by hand to another position along said channel member. In principle the nut needs to be "touched" - for final and complete tightening - only after the fastening location has been finally determined. It will be appreciated that such a fastening assembly is of particular use when large numbers of fastening locations and threaded members are involved, which locations have to be often adjusted - by slidingly moving the respective rod members within the respective channel members already attached to the wall - before the final fastening of the pipe(s) to the rod members can take place.

With the well known fastening assembly the spring member is formed by a coil spring that surrounds the shank of the rod member and extends from the bottom of a recess provided within the nut, the actual length of said recess being large enough to receive the coil spring in its completely compressed state.

A practical disadvantage of the well-known fastening assembly is, that the coil spring, which surrounds the rod member rather closely, may get with its windings easily "jammed" in the threading of the rod member, after which it is prevented from fulfilling its function properly. Moreover a special nut is required to accommodate the coil spring in its completely compressed state.

It is an object of the invention to provide an improved fastening assembly, which does not have said disadvantage.

This aim is achieved
- according to a first aspect of this invention - by the features mentioned in the second part of claim 1 and
- according to a second aspect of this invention - by the features mentioned in the second part of claim 2.

It will be appreciated that with the fastening assembly according to the present invention the spring member acts between the channel member top and the washer, rather than between the washer and the nut with the well-known assembly. It will also be appreciated that with the spring member according to the present invention there is no risk for interference between the spring member and the threaded rod member.

One practical embodiment, within the concept of the first aspect of the invention, has the features defined in claim 3, and preferably also the features mentioned in claim 4.

With this embodiment the two wings (semi-circular ring portions) initially engage - when the nut is provisionally tightened - the channel member top in two points on either side of the longitudinal slot and will, when the nut is tightened further, deform towards a flattened position and become finally clamped, together with the central ring-shaped portion, as a flat and thin piece of material between the channel member top and the washer. In this embodiment the spring member may be advantageously formed of spring steel sheet material.

A second embodiment within the same concept, in which the spring member may be advantageously formed of plastic material, has the features of claim 5 in addition to those of claim 4. In this second embodiment, when the nut is finally tightened, the washer will press said cross-piece downwardly into the longitudinal slot and finally pass through the two semi-circular ring portions and enter into direct clamping contact with the channel member top. This prevents the fastening from getting less tight by creeping of plastic material in case of a spring member of plastics material being interposed between the channel member top and the washer.

A third embodiment of the assembly according to the general concept of claim 1, has the specific features of claim 6 and preferably also the features of claim 7.

An additional aim of this invention is to have (save) the possibility of preassembling the threaded rod member including its anti-rotation head, the nut and the spring member to form a sub-assembly that may be simply placed into engagement with the channel member.

Accordingly a fastening assembly according to the general concept of claim 1, which also has the features of either claim 4 or 5 and wherein said anti-rotation head is hammerhead-shaped and adapted to be inserted through the longitudinal slot of the channel member with its longer dimension oriented in the longitudinal direction of said slot and to be held within the channel member by rotating it through a quarter of a turn, has the additional features defined in the second part of claim 9.

With such an assembly, when the threaded rod including its head, the spring member, the washer and the nut are preassembled to form a sub-assembly, the spring member will be in a tensionfree state, while its central ring-shaped portion is axially locked in place between the head and the washer underlying the nut due to the spacer portions abutting the head.

The spring tension required to resiliently hold the sub-assembly on the channel member is automatically created when mounting the sub-assembly on the channel member.

In this connection it is to be noted that with the fastening assembly according to NL-A-9401397 there is also the possibility to pre-assemble that threaded rod including said anti-rotation head, the spring member, the washer and the nut to form a sub-assembly; in this well-known assembly the pretensioned spring member is captured between the nut and the washer, the latter engaging the head.

A particular embodiment of the invention is obtained with a fastening assembly of the general concept of claim 2, which has the additional features mentioned in claim 10. The modified spring member used in this particular embodiment may be advantageously formed of plastics material and, in addition to be suitable for use with a special type of channel member, has the same advantages as the embodiment that has the combined features of claims 1, 3 (or 4) and 9, including the possibility of pre-assembling the threaded rod member including its head, the nut, the washer and the modified spring member to form a sub-assembly, the modified spring member of which is automatically placed under the desired pretension when uniting the sub-assembly with the channel member.

It is to be noted that FR-A-2 626 942 (= NL-A-8800264) discloses a fastening assembly comprising a channel member having a longitudinal slot, a threaded rod member extending through the slot ourwardly and carrying at its inner end a non-rotary head positioned within the channel member, and further comprising a nut on the outer end of the threaded rod member, with an intermediate member surrounding the rod member and interposed between the top of the channel member and the nut. The intermediary member comprises a flat washer portion and two socket portions extending from said washer portion in opposite axial directions. One of the socket portions is adated to accommodate the nut. The intermediary member is said to be made of synthetic material so that it has a certain compressibility or axial elasticity, whcih allows the assembly to be fixed sufficiently firmly and with the pipe clip half connected with the nut in the desired position relative to the channel member.

The invention will be hereinafter further illustrated by the accompanying drawings showing a number of examples.
Fig. 1 is a cross-sectional view through the channel member and the rod member of the fastening device of the present invention, showing a spring member in a first embodiment;
fig. 2 is a cross-sectional view according to the line II-II in fig. 1;
fig. 3 is a perspective view of the spring member shown in fig. 1;
fig. 4 shows a pre-assembled unit comprising the rod member having a hammer head, the spring member of fig. 3 and a fastening nut;
fig. 5 is a cross-sectional view similar to that of fig. 1, wherein the unit of fig. 5 and the channel member are placed in mutual positions ready for assembling;
fig. 6 is a cross-sectional view, in which the unit of fig. 3 and the channel member are shown in mutual engaging positions and prior to turning the rod member through a quarter of a turn;
fig. 7A, 7B and 7C are cross-sectional views of a modification of the assembly shown in figs. 1-2 and 4-5, wherein both the channel member and the spring member are in a modified form, in three successive stages of attaching the rod member to the channel member;
fig. 8A, 8B and 8C are longitudinal sectional views through the assembly of figs. 7A, 7B and 7C;
fig. 9 is a perspective view of the modified spring member in the assembly of figs. 7A-C, as seen from below;
fig. 10 is a perspective view of the spring member of fig. 9, but now as seen from above;
fig. 11 is a plan view of a modification of the spring member shown in fig. 4 and 9-10;
fig. 11A and 11B show side views of this spring member, as seen in the direction of arrow A and B respectively in fig. 11;
fig. 12 shows an assembly of a rod member having a hammer head, a fastening nut, a washer and a spring member in a fourth embodiment and
fig. 12A and 12B show a plan view and a side view respectively of the spring member in the assembly of fig. 12, as seen from the right.

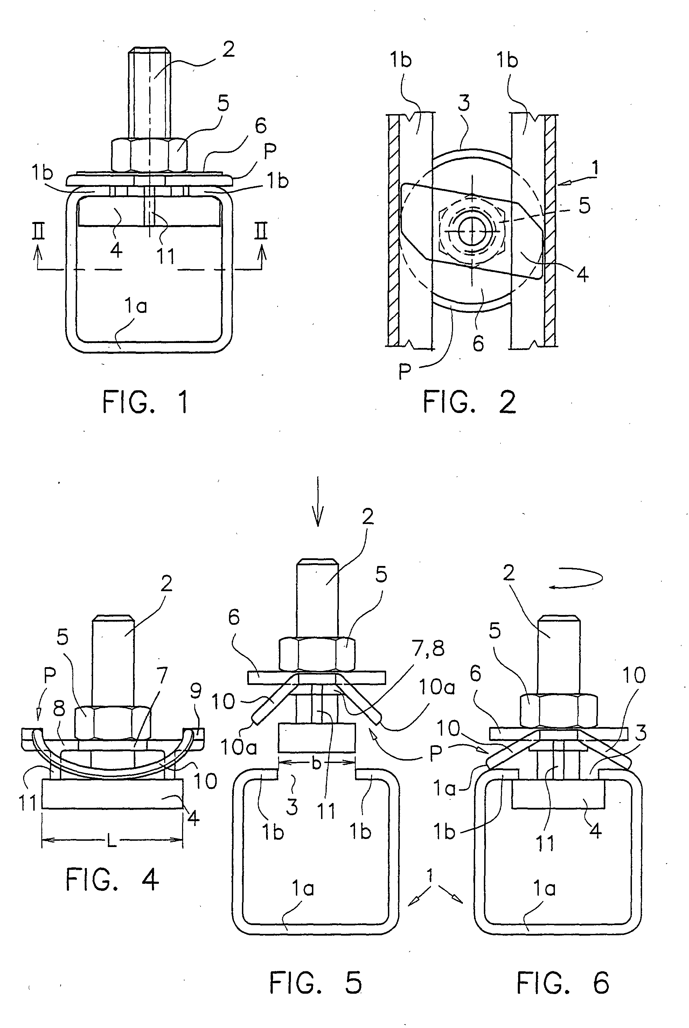

The fastening device shown in figs. 1-6 of the drawing substantially consists of a channel member 1 and a rod member 2, the channel member 1 is intended to be attached with its wall 1a to an e.g. vertical wall, e.g. by means of screws. The opposite top of the member 1 has inwandly projecting flanges 1^{b} defining a longitudinal slot 3 therebetween.

In this example the rod member 2 has a hammer head 4 of a well-known type. On the threaded shaft of the rod member 2 there are provided a nut 5, a flat washer 6 and the special spring member according to the invention, which in the example of fig. 1-6 is indicated at P.

Fig. 1 shows the fastening device in a state, wherein the rod member 2 is fixedly attached to the channel member 1. In this state the rod member 2 engages with the two transversally extending "wing portions" of the hammer head 4 behind the flanges 1b defining the slot 3, while the spring member P has been pressed into a flat state in a manner to be described hereinbelow and the washer 6 is clamped between the wall portions 1b and the nut 5.

The spring member P is formed e.g. by injection moulding from plastics material. It comprises a central ring-shaped portion 7, forming a diametrical by directed bridge portion with a cross piece that is constituted by two radial arms 8 extending in opposite directions. The ends 9 of said bridge portion are thickened in the axial direction (= direction of the axis of the central ring-shaped portion 8) and are broadened in the transverse direction in a platform-like manner.

Two wing portions having (substantially) the shape of half a circle are indicated at 10; the circular arc ends of said wing portions are laterally connected to the platform-like thickened and broadened ends 9. In the tension-free state (fig. 3) the two semi-circular wing portions 10 are extending obliquely outwardly from both sides of the bridge portion 7, 8, 9. Furthermore the spring member P is provided with two spacing studs 11, which project from the bridge portion 7, 8, 9 downwardly on either side of the central ring-shaped portion 7. The internally measured spacing between the spacing studs 11 is smaller than the largest transverse dimension L of the hammer head 4, whereas the internally measured spacing between said studs is larger than the smallest transverse dimension b of the hammer head 4.

In fig. 4 the spring member P of fig. 3 is shown as a part of an assembly, that also comprises the rod member 2 and the nut 5. The spring member P is placed between the hammer head 4 and the nut 5 around the shaft of the rod member 2 and with its bridge portion 7, 8, 9 directed in alignment with the largest transverse dimension L of the hammer head 4, while its spacing rods 11 are bearing on the hammer head face that is directed to the free rod member end. In fig. 4 the nut 5 is bearing directly on the upper side of the bridge portion 7, 8 and 9, but preferably and usually a washer 6 (see fig. 1, 2, 5 and 6) is applied so as to be seated between the mutually facing surfaces of the platform-like ends 9.

With the addition of a washer 6 the assembly of fig. 4 is placed relative to the channel member 1 in the position shown in fig. 5, i.e. with the smallest transverse dimension b of the hammer head 4 at right angles to the longitudinal slot 3.

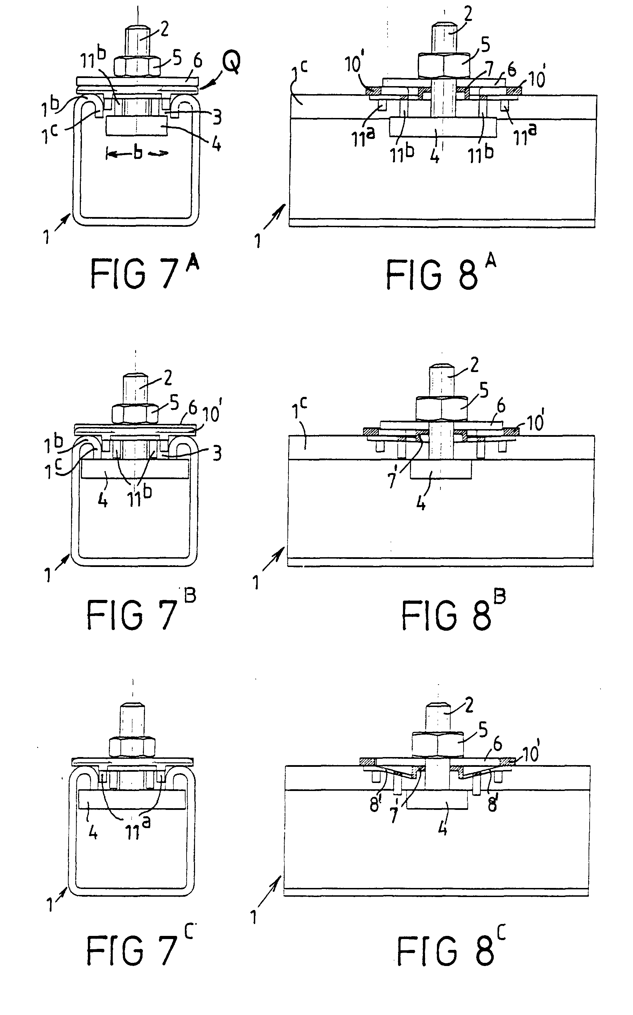

As is shown in fig. 5, the outermost points 10a of the semi-circular wing portions 10 are located in one plane with the free ends of the spacing studs 11, while the portions 10 are spaced from the hammer head 4. From the position shown in fig. 5 the assembly can be easily placed with the hammer head 4 extending through the slot 3 of the channel member 1 to arrive at the position shown in fig. 6, in which the spring member P has its two wing portions 10 slightly compressed in the axial direction so as to engage the channel member flanges 1b under a certain pretension.

While in the position of fig. 6, the rod member is turned through a quarter of a turn, so that the hammer head 1 becomes with its largest transverse dimension L directed at right angles to the longitudinal slot 3 (see fig. 2) and the rod member becomes centered relative to said longitudinal slot 3. While performing the quarter of a turn the spring member P remains stationary, so that the spacer studs 11 become released from the hammer head. The assembly is than in a position in which it is secured against undesired sliding movements relative to the channel member 1. The rod member may be moved from the latter position to its final location and then fixed by tightening the nut 5. While tightening the nut the spacer studs 11 move past the hammer head 4 through the longitudinal slot inwardly, and the two wing portions are pressed completely flat, due to which the two wing portions and the enlarged platformlike ends 9 become a circular ring, within which the washer 6 is captured. The bridge portion 7, 8 and the platform-like ends 9 of the same are pressed into the longitudinal slot, so that the washer 6 becomes in direct contact with the channel member flanges 1b. For this purpose the thickness of the bridge portion 7, 8 should not exceed the wall thickness of the channel member 1.

As compared with the embodiment according figs. 1-6 fig. 7A, 7B-10 show a modified channel member and a modified spring member.

In the description of this modified embodiment corresponding parts will be designated, as much as possible, with the same reference numbers as used in fig. 1-6.

As distinguished from the channel member 1 of fig. 1-6, the flanges 1b defining the slot 3 with the channel member 1 of fig. 7A-C and 8A-C are bent inwardly to form edge portions 1c. As a consequence of this the width of the slot 3 has become slightly larger than the smallest transverse dimension b of the hammer head 4.

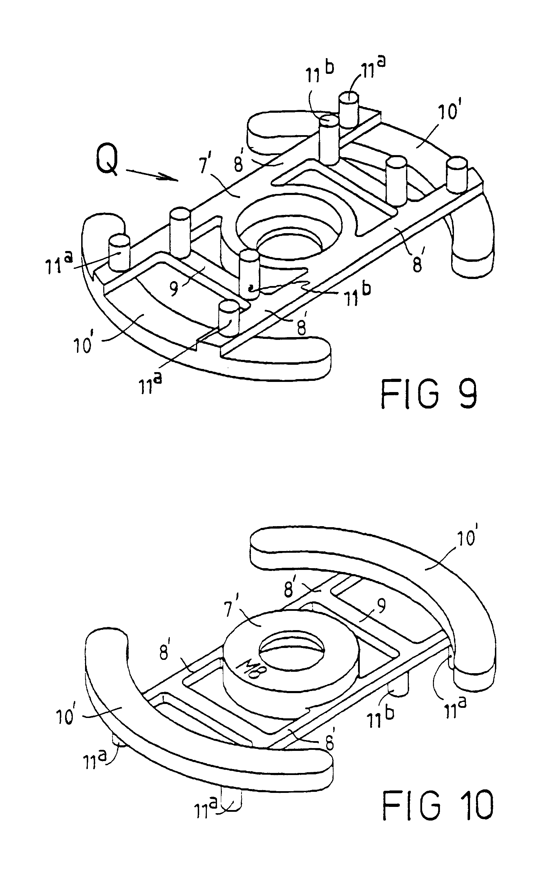

The modified spring member Q of fig. 9 and 10, which may also be formed by injection moulding of plastics material, has a central ring-shaped portion 7', that forms, together with arms 8' extending diametrically therefrom, a diametrical bridge portion, the width of which is just within that of the slot 3 in the channel member 1. On the ends of said bridge portion there are provided two opposite ring sections 10' which are bent according to an arc of a circle and each extend laterally beyond the bridge portion.

At the lower side of the bridge portion there are two sets of each four downwardly projecting studs 11a and 11b respectively. The outer studs 11a are located each on a terminal end of an arm 8' and function to position the bridge portion relative to the slot 3 in the channel member 1. The inner studs 11b extend from cross portions 9 between the arms 8'. The transverse spacing of the studs 11b is well within the smallest transverse dimension b of the hammer head 4, whereas the mutual spacing, as seen in the longitudinal direction (of the bridge portion) between the studs 11b is smaller than the largest transverse dimension of the hammer head 4, but larger than the smallest transverse dimension b of the latter. Furthermore the mutual spacing, as seen in the longitudinal direction (of the bridge portion), between the outer studs 11a is larger than the largest transverse dimension of the hammer head 4.

In its tension-free state the spring member Q is substantially flat, in the sense, that the upper faces of the ring sections 10' and the upper face of the central ring-shaped portion 7' (fig. 10) are positioned in one common plane. The cross piece or bridge portion 8', 8' is positioned axially offset relative to said common plane and constitutes the elastic portion of the spring member.

In the unit shown in fig. 7A and 8A the spring member Q is "loosely" clamped between, on one hand, the washer 6 lying on the ring-shaped central portion 7' and, on the other hand, the hammer head 4 engaging the spacer studs 11b.

The hammer head 4 has its largest transverse dimension directed in the longitudinal direction of the bridge portion of the spring member Q and in the longitudinal direction of the slot 3 of the channel member 1. In fig. 7A and 8A the assembly comprising the rod member 2 with its head 4 and its nut 5, the washer 6 and the spring member with its ring segments 10' is lying loosely on the flanges 1b of the channel member 1. The bridge portion 8', 8' is located with its studs 11a and 11b within the slot 3, whereas the hammer head 4 has its upper face located just above the lower face of the inwardly bent edge portions 1c.

A slight downward pressure on the rod member 2 causes the bridge portion 8', 8' of the spring member Q to bend downwardly, so that the hammer head 4 will become positioned a little lower and become free from the spacer studs 11b. This enables the hammer head to be turned through a quarter of a turn, which brings the assembly in the position shown in fig. 7B and 8B, in which the hammer head 4 extends with its largest transverse dimension transverse to the slot 3 and in which the washer 6 is partially sunk into the space between the two ring segments 10'. Consequently, in the position shown in fig. 7B and 8B, the assembly is in a state, in which it is secured against undesired sliding movements relative to the channel member 1. From this position the rod member 2 can be moved to its definite position and then fixed by tightening of the nut 5. When tightening the nut the spacer studs 11b will move past the hammer head 4 inwardly through the slot 3, while the washer 6 is pressed further between the ring segments 10' to become finally clamped onto the wall portions 1b of the channel member 1 (see fig. 7C and 8C).

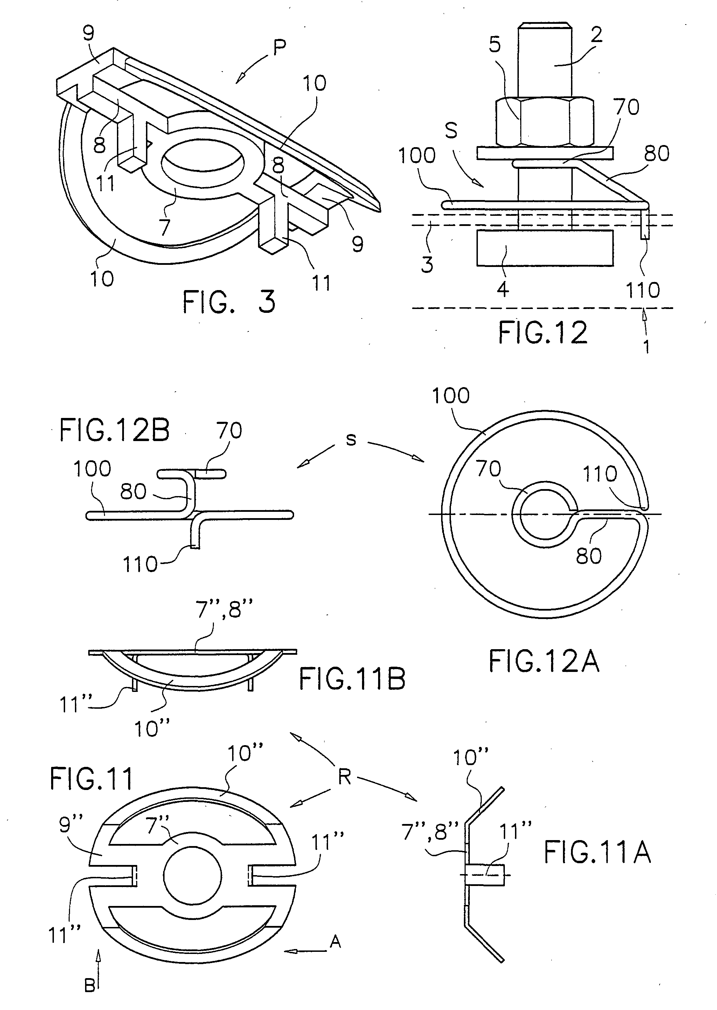

Fig. 11, 11A, 11B show a modification of the above described spring member P, which modification may be obtained by stamping from thin spring steel plate material.

The resemblance in shape and operation of this spring member R as compared with the above described spring member P is clear. In fig. 11, 11A and 11B corresponding parts are indicated by the same reference numbers with the addition of an accent. The major difference is, that the bridge portion 7", 8" is not recessed and that in use the washer completely covers the spring member R, so that upon tightening of the nut the spring member R will become clamped in a flattened condition between the channel member and the washer. The outer diameter of the spring member R in its flattened position may be equal to the diameter of the washer.

In the embodiment according to fig. 12, 12A and 12B the spring member S is formed of spring wire. One end portion of a length of spring wire is bent to a first ring 70 of smaller diameter and an adjacent connecting portion 80 of said spring wire length extends from the closing point of said ring obliquely outwardly to merge into a second end portion of said spring wire length that is formed to a second ring 100 of larger diameter which is positioned in a plane parallel to that of said first ring 70. The terminal end of said second end portion of said spring wire length is bent in the axial direction to form a locking projection 110.

In fig. 12 the spring member S, the rod member 2, the washer 6 and the nut 5 are premounted to an assembly, that may, in the shown position, "hooked" into the channel member 1, in such a way that the projection 110 will extend through the longitudinal slot 3 inwardly and prevent the spring member S from rotating when the rod member 2 is turned through a quarter of a turn.

In its tension-free state the ring 70 is positioned slightly exentrically relative to the ring-shaped portion 100. The amount of exentricity is such, that tightening of the nut 5, which causes the spring member S to be axially compressed via said washer 6 while the connecting portion 80 is swinging inwardly about the connecting point with the outer ring-shaped portion 100, the ring 70 will finally become positioned concentrically relative to the outer ring-shaped portion 100. The washer 6 thereby presses the central ring 70 and the connecting portion 80 into the longitudinal slot 3, so that the washer will become in direct engagement with the channel member and positioned within the outer ring-shaped portion 100.

## Claims

1. A fastening assembly for fastening an object to a wall, comprising
a channel member (1) including two longitudinally extending parallel sides, a wall engaging bottom (1a) joining said sides and a top having inwardly projecting flanges (1b) defining a longitudinal slot (3) therebetween;
a threaded rod member (2) including an anti-rotation head (4) that is adapted to be slidingly received within the channel member (1) and to engage said inwardly projecting flanges (1b) while the threaded rod (2) projects through said slot (3) outwardly;
a nut (5) on the projecting rod member (2) to secure the latter to said channel member (1);
a washer (6) and a one piece spring member (P; R; S) on said threaded rod member (2) between said channel member top and said nut (5), said spring member (P; R; S) functioning - in a pretensioned state with said nut (5) provisionally screwed onto said rod member (2) and said head (4) provisionally received in said channel member (1) - to bridge the clearance space between the channel member top and the washer (6) underlying the nut (5) so as to cause said rod member (2) to be held in place while remaining slidably adjustable along said channel member (1),
**characterized in that** said spring member (P; R; S) comprises
a central ring-shaped portion (7; 7"; 70) surrounding said rod member (2) and having a washer engaging face and a lower face;
an outer portion (10; 10"; 100) connected to and extending from said ring-shaped portion (7; 7"; 70) outwardly to a larger diameter and having a channel member engaging face and upper face,
said outer portion and said central portion being resiliently movable to one another in the axial direction from a tension free state- in which said outer portion (10; 10"; 100) extends with its channel member engaging face to a position that is axially offset from the lower face of said central portion (7; 7"; 70) in a direction towards said channel member - to said pretensioned state - in which said outer portion (10; 10"; 100) engages said channel member (1) at at least two diametrically opposed locations on both sides of said slot (3) and the axial distance between said channel member face of said outer portion and the lower face of said central portion (7; 7"; 70) is reduced as compared with said tension free state
and finally, when the nut (5) is completely tightened, from said pretensioned state to a state in which the spring member is flattened.

2. A fastening assembly for fastening an object to a wall, comprising
a channel member (1) including two longitudinally extending parallel sides, a wall engaging bottom (1a) joining said sides and a top having inwardly projecting flanges (1b) defining a longitudinal slot (3) therebetween;
a threaded rod member (2) including an anti-rotation head (4) that is adapted to be slidingly received within the channel member (1) and to engage said inwardly projecting flanges (1b) while the threaded rod (2) projects through said slot (3) outwardly;
a nut (5) on the projecting rod member (2) to secure the latter to said channel member (1);
a washer (6) and a one piece spring member (Q) on said threaded rod member (2) between said channel member top and said nut (5), said spring member (Q) functioning - in a pretensioned state with said nut (5) provisionally screwed onto said rod member (2) and said head (4) provisionally received in said channel member (1) - to bridge the clearance space between the channel member top and the washer (6) underlying the nut (5) so as to cause said rod member (2) to be held in place while remaining slidably adjustable along said channel member (1),
**characterized in that** said spring member (Q) comprises
a central ring-shaped portion (7') surrounding said rod member (2) and having a washer engaging face and a lower face, said portion having a diameter which is smaller than the width of said channel member slot (3),
an outer ring-shaped portion (10') connected to said central portion (7') and extending therefrom to a radially spaced position around said central portion, said outer portion (10') having a channel member engaging face and an upper face,
said central and outer ring-shaped portions (7' and 10') being movable to one another in the axial direction from a tension free state, in which said spring member (Q) is substantially flat,
to said pretensioned state, in which said outer ring-shaped portion (10') engages said channel member (1) on both sides of said slot (3) and said central ring-shaped portion (7') is partially sunk into said slot (3) while the washer (6) bearing on the the washer engaging face of said central portion is out of contact with the top of the channel member,
and finally, when the nut (5) is completely tightened, from said pretensioned state to a state, in which said central ring-shaped portion (7') is completely sunk into said slot (3) and said washer (6) engages the channel member while being received within the inner circumference of said outer ring-shaped portion (10').

3. An assembly according to claim 1, **characterized in that** said outer portion (10; 10") comprises two wings, which extend obliquely outwardly from said central ring-shaped portion (7; 7").

4. An assembly according to claim 3, **characterized in that** said wings (10; 10") are in the form of semi-circular ring portions, the terminal ends (9; 9") of which join the outer ends of a cross-piece (8; 8") that extends from said central ring-shaped portion (7; 7") radially outwardly in opposite directions, said cross-piece (8; 8") being - in the final state - positioned in line with said slot (3).

5. An assembly according to claim 4, **characterized in that** said cross-piece (8) and said central ring-shaped portion (7) are positioned axially offset relative to the terminal ends (9) of said semi-circular ring portions (10) and have a width which is smaller than that of said slot (3), whereas the two semi-circular wing portions (10) have an inner radius which is larger than that of the washer (6), in such a way, that complete tightening of the nut (5) will cause the two semi-circular wing portions (10) to deform to a flat circular ring, that surrounds the washer (6), the latter being urged in metal-to-metal contact with the channel member top, while said cross-piece (8) and central ring-shaped portion (7) are sunk into said slot (3).

6. A fastening assembly according to claim 1, **characterized in that** the spring member (S) is formed of a spring wire length, a first end portion of which is bent into a first ring-shaped portion (70) of a relative small diameter and forming said central ring-shaped portion (70), an intermediate portion (80) of said spring wire length extending from said first ring-shaped porticn (70) in an axial plane obliquely outwardly and merging into a second end portion of said spring wire length which is bent into a second ring-shaped portion (100) of a relatively large diameter forming said outer portion (100) and being positioned in a plane which is parallel to that of said first ring-shaped portion (70), the terminal end (110) of said second end portion being bent into the axial direction to form a locking pin (110) adapted to project into the longitudinal slot (3) of said channel member (1).

7. A fastening assembly according to claim 6, **characterized in that** in the untensioned state of the spring member (S) the central ring-shaped portion (70) is positioned excentrically relative to said second, outer ring-shaped portion (100), to such an extent, that axial compression of the spring member (S) causes the central ring-shaped portion (70) to become positioned concentrically within said outer ring-shaped portion (100).

8. A fastening assembly according to claim 7, **characterized in that** the outer diameter of said central ring-shaped portion (70) is smaller than the width of said slot (3) and that the inner diameter of said outer ring-shaped portion (100) is larger than the diameter of the washer (6).

9. A fastening assembly according to claim 4 or 5, wherein said anti-rotation head is hammer head shaped and adapted to be inserted through the longitudinal slot of the channel member with its longer dimension oriented in the longitudinal direction of said slot and to be held within the channel member by rotating it though a quarter of a turn, **characterized by** two spacer portions (11; 11") positioned on either side of said cntral ring-shaped portion (7; 7") and projecting from said cross-piece (8; 8") in an axial direction turned away from said washer (6) underlying said nut (5), said spacer portions (11; 11") having their free end faces - in the tensionfree state of the spring member (P: R) - positioned substantially in one plane with the outermost engagement points of said two wings (10; 10"), whereas the distance between said spacer portions (11; 11") is smaller than the longer dimension (L) and larger than the smaller dimension (B) of said head (4), so as to allow said two spacer portion (11; 11") to engage said head (4) according to the longer dimension (L) of the latter when the head (4) is being inserted into said slot (3) and to become released from said head (4) when the latter is turned upon having been inserted.

10. A fastening assembly according to claim 2, wherein said anti-rotation head is hammerhead-shaped and adapted to be inserted through the slot (3) of the channel member with its longer dimension oriented in the longitudinal direction of said slot (3) and to be held within the channel member by rotating it through a quarter of a turn, **characterized in that** said outer ring-shaped portion (10') of said spring member (Q) comprises two ring segments (10') positioned diametrically and concentrically relative to said central ring-shaped portion (7') and circumscribing a circle of a diameter which is larger than that of the washer (6),
the upper faces of said ring segments (10') being - in the tensionfree state of the spring member (Q) - substantially coplanar with the upper, washer engaging face of said central ring-shaped portion (7'),
said ring segments (10') being each connected to the respective outer end of a resilient cross-piece (8') that extends from said central ring-shaped portion (7') radially outwardly in opposite directions and has a width which is smaller than that of said slot (3),
said cross-piece (8') being positioned axially offset relative to the common plane of said ring segments (10') and said central ring-shaped portion (7') in a direction turned away from said nut and to an extent that corresponds to the thickness of said washer (6),
two spacer portions (11b) being provided, which extend from said cross-piece (8') in an axial direction turned away from the nut (5) and which are positioned on opposite sides of said central ring-shaped portion (7') at a mutual spacing - as seen in the longitudinal direction of said cross piece - which is smaller than the largest dimension (L) and larger than the smallest dimension (B) of said head (4),
so as to allow said two spacer portions (11b) to engage said head along the longer dimension (L) of the latter when said cross-piece (8') and said head (4) are both positioned longitudinally in alignment with said slot (3) for introduction into and through said slot (3) respectively, and to become finally released from said head (4) when the latter, upon being inserted through the slot (3), is caused to turn to a position which is transverse to said slot (3) and said cross piece (8').

## Patentansprüche

1. Befestigungsanordnung zum Befestigten eines Gegenstands an einer Wand, wobei die Befestigungsanordnung folgendes aufweist:
ein Kanalelement (1), das aufweist: zwei in Längsrichtung verlaufende parallele Seiten, einen mit der Wand in Eingriff gelangenden Boden (1a), der die Seiten verbindet, und eine Oberseite, die nach innen vorspringende Flansche (1b) hat, die zwischen sich einen Längsschlitz (3) definieren;
ein Gewindestangenelement (2), das einen Gegendrehungskopf (4) aufweist, der so ausgebildet ist, daß er in dem Kanalelement (1) gleitend aufgenommen wird und mit den nach innen vorspringenden Flanschen (1b) in Eingriff gelangt, während gleichzeitig die Gewindestange (2) durch den Schlitz (3) hindurch nach außen vorspringt;
eine Mutter (5) auf dem vorspringenden Stangenelement (2), um letzteres an dem Kanalelement (1) zu befestigen;
eine Beilegscheibe (6) und ein einstückiges Federelement (P; R; S) an dem Gewindestangenelement (2) zwischen der Oberseite des Kanalelements und der Mutter (5), wobei das Federelement (P; R; S) - in einem vorgespannten Zustand, in dem die Mutter (5) provisorisch auf das Stangenelement (2) geschraubt und der Kopf (4) provisorisch in dem Kanalelement (1) aufgenommen ist - so wirksam ist, daß es den Zwischenraum zwischen der Oberseite des Kanalelements und der Beilegscheibe (6), die unter der Mutter (5) liegt, überbrückt, um zu bewirken, daß das Stangenelement (2) an Ort und Stelle gehalten wird, während es gleichzeitig entlang dem Kanalelement (1) gleitbar einstellbar bleibt,
**dadurch gekennzeichnet, daß** das Federelement (P; R; S) folgendes aufweist:
einen zentralen ringförmigen Bereich (7; 7"; 70), der das Stangenelement (2) umgibt und eine mit der Beilegscheibe in Eingriff gelangende Fläche und eine untere Fläche hat;
einen äußeren Bereich (10; 10"; 100), der mit dem ringförmigen Bereich (7; 7"; 70) verbunden ist und davon nach außen zu einem größeren Durchmesser verläuft und eine mit dem Kanalelement in Eingriff stehende Fläche und eine obere Fläche hat,
wobei der äußere Bereich und der zentrale Bereich in der Axialrichtung zueinander federnd bewegbar sind: aus einem spannungsfreien Zustand - in dem sich der äußere Bereich (10; 10"; 100) mit seiner mit dem Kanalelement in Eingriff gelangenden Fläche in eine Position erstreckt, die von der unteren Fläche des zentralen Bereichs (7; 7"; 70) in einer Richtung zu dem Kanalelement hin axial versetzt ist - in den vorgespannten Zustand - in dem der äußere Bereich (10; 10"; 100) mit dem Kanalelement (1) an mindestens zwei diametral entgegengesetzten Stellen an beiden Seiten des Schlitzes (3) in Eingriff steht und der axiale Abstand zwischen der mit dem Kanalelement in Eingriff gelangenden Fläche des äußeren Bereichs und der unteren Fläche des zentralen Bereichs (7; 7"; 70) im Vergleich mit dem spannungsfreien Zustand verringert ist -
und schließlich dann, wenn die Mutter (5) vollständig angezogen ist, aus dem vorgespannten Zustand in einen Zustand, in dem das Federelement abgeflacht ist.

2. Befestigungsanordnung zum Befestigen eines Gegenstands an einer Wand, wobei die Befestigungsanordnung folgendes aufweist:
ein Kanalelement (1), das aufweist: zwei in Längsrichtung verlaufende parallele Seiten, einen mit der Wand in Eingriff gelangenden Boden (1a), der die Seiten verbindet, und eine Oberseite, die nach innen vorspringende Flansche (1b) hat, die zwischen sich einen Längsschlitz (3) definieren;
ein Gewindestangenelement (2), das einen Gegendrehungskopf (4) aufweist, der so ausgebildet ist, daß er in dem Kanalelement (1) gleitend aufgenommen wird und mit den nach innen vorspringenden Flanschen (1b) in Eingriff gelangt, während gleichzeitig die Gewindestange (2) durch den Schlitz (3) hindurch nach außen vorspringt;
eine Mutter (5) auf dem vorspringenden Stangenelement (2), um letzteres an dem Kanalelement (1) zu befestigen;
eine Beilegscheibe (6) und ein einstückiges Federelement (Q) an dem Gewindestangenelement (2) zwischen der Oberseite des Kanalelements und der Mutter (5), wobei das Federelement (Q) - in einem vorgespannten Zustand, in dem die Mutter (5) provisorisch auf das Stangenelement (2) geschraubt und der Kopf (4) provisorisch in dem Kanalelement (1) aufgenommen ist - so wirksam ist, daß es den Zwischenraum zwischen der Oberseite des Kanalelements und der Beilegscheibe (6), die unter der Mutter (5) liegt, überbrückt, um zu bewirken, daß das Stangenelement (2) an Ort und Stelle gehalten wird, während es gleichzeitig entlang dem Kanalelement (1) gleitbar einstellbar bleibt,
**dadurch gekennzeichnet, daß** das Federelement (Q) folgendes aufweist:
einen zentralen ringförmigen Bereich (7'), der das Stangenelement (2) umgibt und eine mit der Beilegscheibe in Eingriff gelangende Fläche und eine unter Fläche hat, wobei der Bereich einen Durchmesser hat, der kleiner als die Breite des Schlitzes (3) des Kanalelements ist,
einen äußeren ringförmigen Bereich (10'), der mit dem zentralen Bereich (7') verbunden ist und davon zu einer in Radialrichtung beabstandeten Position um den zentralen Bereich herum verläuft, wobei der äußere Bereich (10') eine mit dem Kanalelement in Eingriff gelangende Fläche und eine obere Fläche hat,
wobei der zentrale und der äußere ringförmige Bereich (7' und 10') in der Axialrichtung zueinander bewegbar sind: aus einem spannungsfreien Zustand, in dem das Federelement (Q) im wesentlichen flach ist,
in einen vorgespannten Zustand, in dem der äußere ringförmige Bereich (10') mit dem Kanalelement (1) an beiden Seiten des Schlitzes (3) in Eingriff gelangt und der zentrale ringförmige Bereich (7') teilweise in dem Schlitz (3) versenkt ist, während gleichzeitig die Beilegscheibe (6), die an der mit der Beilegscheibe in Eingriff gelangenden Fläche des zentralen Bereichs anliegt, außer Kontakt mit der Oberseite des Kanalelements ist,
und schließlich dann, wenn die Mutter (5) vollständig angezogen ist, aus dem vorgespannten Zustand in einen Zustand, in dem der zentrale ringförmige Bereich (7') vollständig in dem Schlitz (3) versenkt ist, und die Beilegscheibe (6) mit dem Kanalelement in Eingriff gelangt, während sie gleichzeitig innerhalb des Innenumfangs des äußeren ringförmigen Bereichs (10') aufgenommen wird.

3. Befestigungsanordnung nach Anspruch 1, **dadurch gekennzeichnet, daß** der äußere Bereich (10; 10") zwei Flügel aufweist, die sich von dem zentralen ringförmigen Bereich (7; 7") schräg nach außen erstrecken.

4. Anordnung nach Anspruch 3, **dadurch gekennzeichnet, daß** die Flügel (10; 10") in Form von halbkreisförmigen Ringbereichen sind, deren Abschlußenden (9; 9") die äußeren Enden eines Querstücks (8; 8"), das sich von dem zentralen ringförmigen Bereich (7; 7") radial nach außen in entgegengesetzte Richtungen erstreckt, verbinden, wobei das Querstück (8; 8") - im Endzustand - in Reihe mit dem Schlitz (3) positioniert ist.

5. Anordnung nach Anspruch 4, **dadurch gekennzeichnet, daß** das Querstück (8) und der zentrale ringförmige Bereich (7) relativ zu den Abschlußenden (9) der halbkreisförmigen Ringbereiche (10) axial versetzt positioniert sind und eine Breite haben, die geringer als diejenige des Schlitzes (3) ist, wogegen die zwei halbkreisförmigen Flügelbereiche (10) einen Innenradius haben, der größer als derjenige der Beilegscheibe (6) ist, und zwar derart, daß das vollständige Anziehen der Mutter (5) bewirkt, daß sich die zwei halbkreisförmigen Flügelbereiche (10) zu einem flachen kreisförmigen Ring verformen, der die Beilegscheibe (6) umgibt, wobei die letztere in Metall-Metall-Kontakt mit der Oberseite des Kanalelements gedrängt wird, während gleichzeitig das Querstück (8) und der zentrale ringförmige Bereich (7) in den Schlitz (3) versenkt werden.

6. Befestigungsanordnung nach Anspruch 1, **dadurch gekennzeichnet, daß** das Federelement (S) aus einem Federdrahtstück gebildet ist, dessen erster Endbereich zu einem ersten ringförmigen Bereich (70) mit einem relativ kleinen Durchmesser, gekrümmt ist und den zentralen ringförmigen Bereich (70) bildet, wobei sich ein Zwischenbereich (80) des Federdrahtstücks von dem ersten ringförmigen Bereich (70) in einer axialen Ebene schräg nach außen erstreckt und in einen zweiten Endbereich des Federdrahtstücks übergeht, der zu einem zweiten ringförmigen Bereich (100) mit einem relativ großen Durchmesser gekrümmt ist, der den äußeren Bereich (100) bildet und in einer Ebene positioniert ist, die zu derjenigen des ersten ringförmigen Bereichs (70) parallel ist, wobei das Abschlußende (110) des zweiten Endbereichs in der Axialrichtung derart gekrümmt ist, daß es einen Arretierstift (110) bildet, der so ausgebildet ist, daß er in den Längsschlitz (3) des Kanalelements (1) vorspringt.

7. Befestigungsanordnung nach Anspruch 6, **dadurch gekennzeichnet, daß** der zentrale ringförmige Bereich (70) im ungespannten Zustand des Federelements (S) relativ zu dem zweiten, äußeren ringförmigen Bereich (100) in einem solchen Ausmaß exzentrisch positioniert ist, daß eine axiale Kompression des Federelements (S) bewirkt, daß der zentrale ringförmige Bereich (70) innerhalb des äußeren ringförmigen Bereichs (100) konzentrisch positioniert wird.

8. Befestigungsanordnung nach Anspruch 7, **dadurch gekennzeichnet, daß** der Außendurchmesser des zentralen ringförmigen Bereichs (70) kleiner als die Breite des Schlitzes (3) ist und daß der Innendurchmesser des äußeren ringförmigen Bereichs (100) größer als der Durchmesser der Beilegscheibe (6) ist.

9. Befestigungsanordnung nach Anspruch 4 oder 5, wobei der Gegendrehungskopf hammerkopfförmig und so ausgebildet ist, daß er durch den Längsschlitz des Kanalelements hindurch eingesetzt werden kann, wobei seine längere Dimension in der Längsrichtung des Schlitzes orientiert ist, und daß er innerhalb des Kanalelements gehalten wird, indem er um eine Vierteldrehung gedreht wird, **gekennzeichnet durch** zwei Abstandsbereiche (11; 11"), die an jeder Seite des zentralen ringförmigen Bereichs (7; 7") positioniert sind und von dem Querstück (8; 8") in einer Axialrichtung vorspringen, die von der unter der Mutter (5) liegenden Beilegscheibe (6) abgewandt ist, wobei die freien Endflächen der Abstandsbereiche (11; 11") - im spannungsfreien Zustand des Federelements (P; R) - im wesentlichen in einer Ebene mit den äußersten Eingriffspunkten der zwei Flügel (10; 10") positioniert sind, wogegen der Abstand zwischen den Abstandsbereichen (11; 11") geringer als die längere Dimension (L) und größer als die kleinere Dimension (B) des Kopfes (4) ist, um zuzulassen, daß die zwei Abstandsbereiche (11; 11") mit dem Kopf (4) entsprechend der längeren Dimension (L) des letzteren in Eingriff gelangen, wenn der Kopf (4) in den Schlitz (3) eingesetzt wird, und von dem Kopf (4) freigegeben werden, wenn der letztere beim dem Einsetzen gedreht wird.

10. Befestigungsanordnung nach Anspruch 2, wobei der Gegendrehungskopf hammerkopfförmig und so ausgebildet ist, daß er durch den Schlitz (3) des Kanalelements hindurch eingesetzt wird, wobei seine längere Dimension in der Längsrichtung des Schlitzes (3) orientiert ist, und daß er innerhalb des Kanalelements gehalten wird, indem er um eine Vierteldrehung gedreht wird, **dadurch gekennzeichnet, daß** der äußere ringförmige Bereich (10') des Federelements (Q) zwei Ringsegmente (10') aufweist, die relativ zu dem zentralen ringförmigen Bereich (7') diametral und konzentrisch positioniert sind und einen Kreis mit einem Durchmesser beschreiben, der größer als derjenige der Beilegscheibe (6) ist,
wobei die oberen Flächen der Ringsegmente (10') - im spannungsfreien Zustand des Federelements (Q) - mit der oberen, mit der Beilegscheibe in Eingriff gelangenden Fläche des zentralen ringförmigen Bereichs (7') im wesentlichen koplanar sind,
wobei die Ringsegmente (10') jeweils mit dem jeweiligen äußeren Ende eines elastischen Querstücks (8') verbunden sind, das sich von dem zentralen ringförmigen Bereich (7') radial nach außen in entgegengesetzte Richtungen erstreckt und eine Breite hat, die geringer als diejenige des Schlitzes (3) ist,
wobei das Querstück (8') relativ zu der gemeinsamen Ebene der Ringsegmente (10') und dem zentralen ringförmigen Bereich (7') in einer von der Mutter abgewandten Richtung und in einem Ausmaß, das der Dicke der Beilegscheibe (6) entspricht, axial versetzt positioniert ist,
wobei zwei Abstandsbereiche (11b) vorgesehen sind, die sich von dem Querstück (8') in einer von der Nut (5) abgewandten Axialrichtung erstrecken und die an gegenüberliegenden Seiten des zentralen ringförmigen Bereichs (7') mit einem gegenseitigen Abstand - gesehen in der Längsrichtung des Querstücks -, der geringer als die größte Dimension (L) und größer als die kleinste Dimension (B) des Kopfes (4) ist, positioniert sind,
um zuzulassen, daß die zwei Abstandsbereiche (11b) mit dem Kopf entlang der längeren Dimension (L) des letzteren in Eingriff gelangen, wenn sowohl das Querstück (8') als auch der Kopf (4) in Längsrichtung in Ausfluchtung mit dem Schlitz (3) zum Einsetzen in bzw. durch den Schlitz (3) hindurch positioniert sind, und daß sie schließlich von dem Kopf (4) freigegeben werden, wenn bewirkt wird, daß sich der letztere beim Einsetzen durch den Schlitz (3) hindurch in eine Position dreht, die quer zu dem Schlitz (3) und dem Querstück (8') ist.

## Revendications

1. Ensemble de fixation pour fixer un objet à une paroi, comprenant :
- un organe (1) formant canal comprenant deux côtés parallèles s'étendant longitudinalement, un fond (1a) en contact avec la paroi joignant lesdits côtés et une partie supérieure munie de bords (1b) en saillie vers l'intérieur et définissant entre eux une fente longitudinale (3) ;
- un organe (2) de tige filetée comprenant une tête anti-rotation (4) qui est apte à être reçue de façon coulissante dans l'organe (1) formant canal et à venir en contact avec lesdits bords (1b) en saillie vers l'intérieur, tandis que la tige filetée (2) fait saillie à travers ladite fente (3) vers l'extérieur ;
- un écrou (5) sur l'organe de tige (2) en saillie pour fixer ce dernier audit organe (1) formant canal ;
- une rondelle (6) et un organe élastique en une pièce (P ; R ; S) sur ledit organe (2) de tige filetée entre ladite partie supérieure de l'organe formant canal et ledit écrou (5), ledit organe élastique (P ; R ; S) fonctionnant - dans un état précontraint avec ledit écrou (5) provisoirement vissé sur ledit organe de tige (2) et ladite tête (4) provisoirement reçue dans ledit organe (1) formant canal - pour enjamber l'espace libre entre la partie supérieure de l'organe formant canal et la rondelle (6) sous-jacente à l'écrou (5) de sorte à obtenir que ledit organe de tige (2) soit retenu en place tout en restant réglable par coulissement le long dudit organe (1) formant canal,
**caractérisé en ce que** ledit organe élastique (P ; R ; S) comprend :
- une partie centrale de forme annulaire (7 ; 7" ; 70) entourant ledit organe de tige (2) et présentant une face en contact avec la rondelle et une face inférieure ;
- une partie extérieure (10 ; 10" ; 100) s'étendant depuis ladite partie de forme annulaire et reliée à cette partie annulaire (7 ; 7" ; 70) vers l'extérieur à un diamètre plus grand et présentant une face en contact avec l'organe formant canal et une face supérieure,
- ladite partie extérieure et ladite partie centrale étant mobiles élastiquement l'une par rapport à l'autre dans la direction axiale à partir d'un état exempt de contrainte - dans lequel ladite partie extérieure (10 ; 10" ; 100) s'étend avec sa face en contact avec l'organe formant canal vers une position qui est décalée axialement par rapport à la face inférieure de ladite partie centrale (7 ; 7" ; 70) dans une direction vers ledit organe formant canal - audit état précontraint - dans lequel ladite partie extérieure (10 ; 10" ; 100) vient en contact avec ledit organe (1) formant canal en au moins deux emplacements diamétralement opposés des deux côtés de ladite fente (3) et la distance axiale entre ladite face de l'organe formant canal de ladite partie extérieure et la face inférieure de ladite partie centrale (7 ; 7" ; 70) est réduite par comparaison avec ledit état exempt de contrainte
- et finalement lorsque l'écrou (5) est complètement serré, dudit état précontraint à un état dans lequel l'organe élastique est aplati.

2. Ensemble de fixation pour fixer un objet à une paroi, comprenant :
- un organe (1) formant canal comprenant deux côtés parallèles s'étendant longitudinalement, un fond (1a) en contact avec la paroi joignant les deux côtés et une partie supérieure munie de bords (1b) en saillie vers l'intérieur et définissant entre eux une fente longitudinale (3) ;
- un organe (2) de tige filetée comprenant une tête anti-rotation (4) qui est apte à être reçue de façon coulissante dans l'organe (1) formant canal et à venir en contact avec lesdits bords (1b) en saillie vers l'intérieur, tandis que la tige filetée (2) fait saillie à travers ladite fente (3) vers l'extérieur ;
- un écrou (5) sur l'organe de tige (2) en saillie pour fixer ce dernier audit organe (1) formant canal ;
- une rondelle (6) et un organe élastique en une pièce (Q) sur ledit organe (2) de tige filetée entre ladite partie supérieure de l'organe formant canal et ledit écrou (5), ledit organe élastique (Q) fonctionnant - dans un état précontraint avec ledit écrou (5) provisoirement vissé sur ledit organe de tige (2) et ladite tête (4) provisoirement reçue dans ledit organe (1) formant canal - pour enjamber l'espace libre entre la partie supérieure de l'organe formant canal et la rondelle (6) sous-jacente à l'écrou (5) de sorte à obtenir que ledit organe de tige (2) soit retenu en place tout en restant réglable par coulissement le long dudit organe (1) formant canal,
**caractérisé en ce que** ledit organe élastique (Q) comprend :
- une partie centrale de forme annulaire (7') entourant ledit organe de tige (2) et présentant une face en contact avec la rondelle et une face inférieure, ladite partie présentant un diamètre qui est inférieur à la largeur de ladite fente (3) de l'organe formant canal,
- une partie extérieure (10') de forme annulaire reliée à ladite partie centrale (7') et s'étendant à partir de cette partie centrale vers une position radialement espacée autour de ladite partie centrale, ladite partie extérieure (10') présentant une face en contact avec l'organe formant canal et une face supérieure,
- lesdites parties centrale et extérieure de forme annulaire (7' et 10') étant mobiles l'une par rapport à l'autre dans la direction axiale à partir d'un état exempt de contrainte - dans lequel ledit organe élastique (Q) est sensiblement plat,
- vers ledit état précontraint dans lequel ladite partie extérieure de forme annulaire (10') vient en contact avec l'organe (1) formant canal des deux côtés de ladite fente (3) et ladite partie centrale de forme annulaire (7') est partiellement noyée dans ladite fente (3) tandis que la rondelle (6) portant sur la face en contact avec la rondelle de ladite partie centrale est hors de contact avec la partie supérieure de l'organe formant canal,
et finalement, lorsque l'écrou (5) est complètement serré, du dit état précontraint vers un état, dans lequel ladite partie centrale de forme annulaire (7') est complètement noyée dans ladite fente (3) et ladite rondelle (6) vient en contact avec l'organe formant canal tout en état reçue dans la circonférence intérieure de ladite partie extérieure de forme annulaire (10').

3. Ensemble selon la revendication 1, **caractérisé en ce que** ladite partie extérieure (10; 10") comprend deux ailes, qui s'étendent obliquement vers l'extérieur à partir de ladite partie centrale de forme annulaire (7 ; 7").

4. Ensemble selon la revendication 3, **caractérisé en ce que** lesdites ailes (10 ; 10") sont en forme de parties de bague semi-circulaire, dont les extrémités terminales (9, 9") joignent les extrémités extérieures d'une pièce transversale (8, 8") qui s'étend depuis ladite partie centrale de forme annulaire (7 ; 7") radialement vers l'extérieur dans des directions opposées, ladite partie transversale (8 ; 8") étant - dans l'état final - positionnée alignée sur ladite fente (3).

5. Ensemble selon la revendication 4, **caractérisé en ce que** ladite pièce transversale (8) et ladite partie centrale de forme annulaire (7) sont positionnées axialement décalées par rapport aux extrémités terminales (9) desdites parties (10) de bague semi-circulaire et présente une largeur qui est inférieure à celle de ladite fente (3), tandis que les deux parties (10) d'ailes semi-circulaires présentent un rayon intérieur qui est supérieur à celui de la rondelle (6), de telle sorte que le serrage complet de l'écrou (5) provoque la déformation des deux parties (10) d'ailes semi-circulaires en une bague circulaire plate, qui entoure la rondelle (6), cette dernière étant repoussée en contact métal-métal avec la partie supérieure de l'organe formant canal, tandis que ladite pièce transversale (8) et la partie centrale de forme annulaire (7) sont noyées dans ladite fente (3).

6. Ensemble de fixation selon la revendication 1, **caractérisé en ce que** l'organe élastique (S) est formé d'une longueur de fil élastique, dont une première partie d'extrémité est pliée en une première partie de forme annulaire (70) d'un diamètre relativement petit et formant ladite partie centrale (70) de forme annulaire, une partie intermédiaire (80) de ladite longueur de fil élastique s'étendant depuis ladite première partie (70) de forme annulaire dans un plan axial obliquement vers l'extérieur et se mélangeant dans une deuxième partie d'extrémité de ladite longueur élastique du fil qui est pliée dans une deuxième partie (100) de forme annulaire d'un diamètre relativement important formant ladite partie extérieure (100) et étant positionnée dans un plan qui est parallèle à celui de ladite première partie de forme annulaire (70), l'extrémité terminale (110) de ladite deuxième partie d'extrémité étant pliée dans la direction axiale pour former une broche de verrouillage (110) apte à faire saillie dans la fente longitudinale (3) dudit organe (1) formant canal.

7. Ensemble de fixation selon la revendication 6, **caractérisé en ce que**, dans l'état sans contrainte de l'organe élastique (S), la partie centrale de forme annulaire (70) est positionnée excentriquement par rapport à ladite deuxième partie extérieure de forme annulaire (100), jusqu'à un niveau tel que la compression axiale de l'organe élastique (S) conduise la partie centrale de forme annulaire (70) à être positionnée concentriquement dans ladite partie extérieure de forme annulaire (100).

8. Ensemble de fixation selon la revendication 7, **caractérisé en ce que** le diamètre extérieur de ladite partie centrale de forme annulaire (70) est inférieur à la largeur de ladite fente (3) et **en ce que** le diamètre intérieur de ladite partie extérieure de forme annulaire (100) est supérieur au diamètre de la rondelle (6).

9. Ensemble de fixation selon la revendication 4 ou 5, dans lequel ladite tête anti-rotation est en forme de tête de marteau et est apte à être insérée à travers la fente longitudinale de l'organe formant canal avec sa plus dimension la plus longue orientée dans la direction longitudinale de ladite fente et destinée à être retenue dans l'organe formant canal en la faisant tourner d'un quart de tour, **caractérisé par** deux parties d'espacement (11, 11") positionnées de chaque côté de ladite partie centrale de forme annulaire (7 ; 7") et faisant saillie de ladite pièce transversale (8 ; 8") dans une direction axiale s'éloignant de ladite rondelle (6) sous-jacente audit écrou (5), lesdites parties d'espacement (11, 11") ayant leurs faces d'extrémité libre - à l'état exempt de contrainte de l'organe élastique (P ; R) - positionnées sensiblement dans un plan avec les points de contact les plus extérieurs desdites deux ailes (10 ; 10"), tandis que la distance entre lesdites parties d'espacement (11 ; 11") est inférieure à la plus grande dimension (L) et supérieure à la plus petite dimension (B) de ladite tête (4), de façon à permettre aux dites deux parties d'espacement (11 ; 11") de venir en contact avec ladite tête (4) selon la plus grande dimension (L) de cette dernière lorsque la tête (4) est insérée dans ladite fente (3) et à être libérées de ladite tête (4) lorsque cette dernière est tournée après avoir été insérée.

10. Ensemble de fixation selon la revendication 2, dans lequel ladite tête anti-rotation est en forme de tête de marteau et est apte à être insérée à travers la fente (3) de l'organe formant canal avec sa plus grande dimension orientée dans la direction longitudinale de ladite fente (3) et à être retenue dans l'organe formant canal en la faisant tourner d'un quart de tour, **caractérisé en ce que** ladite partie extérieure de forme annulaire (10') dudit organe élastique (Q) comprend deux segments annulaires (10') positionnés diamétralement et concentriquement par rapport à ladite partie centrale de forme annulaire (7') et étant circonscrit à un cercle d'un diamètre qui est supérieur à celui de la rondelle (6),
- les faces supérieures desdits segments annulaires (10') étant - dans l'état exempt de contrainte de l'organe élastique (Q) - sensiblement coplanaires avec la face supérieure, en contact avec la rondelle de ladite partie centrale de forme annulaire (7'),
- lesdits segments annulaires (10') étant chacun relié à l'extrémité extérieure respective d'une pièce transversale élastique (8') qui s'étend depuis ladite partie centrale de forme annulaire (7') radialement vers l'extérieur dans des directions opposées et présente une largeur qui est inférieure à celle de ladite fente (3),
- ladite pièce transversale (8') étant positionnée axialement décalée par rapport au plan commun desdits segments annulaires (10') et de ladite partie centrale de forme annulaire (7') dans une direction s'éloignant dudit écrou et à un niveau qui correspond à l'épaisseur de ladite rondelle (6),
- deux parties d'espacement (11b) étant prévues, qui s'étendent à partir de ladite pièce transversale (8') dans une direction axiale qui s'éloigne de l'écrou (5) et qui sont positionnées sur des côtés opposés de ladite partie centrale de forme annulaire (7') à un espacement mutuel - vu dans la direction longitudinale de ladite pièce transversale - qui est inférieure à la plus grande dimension (L) et supérieure à la plus petite dimension (B) de ladite tête (4),
- de façon à permettre aux dites deux parties d'espacement (11b) de venir en contact avec ladite tête le long de la plus grande dimension (L) de cette dernière lorsque ladite pièce transversale (8') et ladite tête (4) sont toutes les deux positionnées longitudinalement en alignement avec ladite fente (3) pour introduire respectivement dans et à travers ladite fente (3) et pour être finalement libérées de ladite tête (4), lorsqu'on a fait tourner cette dernière après l'avoir insérée à travers la fente (3), vers une position qui est transversale à ladite fente (3) et à ladite pièce transversale (8').
